# EUROPÄISCHE PATENTSCHRIFT

(11) **EP 3 362 267 B1**
(45) Veröffentlichungstag und Bekanntmachung des Hinweises auf die Patenterteilung: **17.06.2020**
(21) Anmeldenummer: 16775735.0
(22) Anmeldetag: 05.10.2016
(51) Int. Cl.: B29C 67/24, B29C 45/16, B29C 45/14, B29C 37/00

(54) **SPRITZGIESSMASCHINE AUFWEISEND EINE BESCHICHTUNGSANLAGE**
INJECTION MOULDING MACHINE WITH A COATING UNIT
MACHINE À MOULER PAR INJECTION CONTENANT UNE UNITÉ DE REVÊTEMENT

(30) Priorität: 12.10.2015 DE 102015117309
(43) Veröffentlichungstag der Anmeldung: 22.08.2018
(73) Patentinhaber: KraussMaffei Technologies GmbH, 80997 München (DE)
(72) Erfinder: SCHNEEBAUER, Martin, 80807 München (DE); EILHARDT, Florian, 81247 München (DE); KLOTZ, Bernd, 85232 Günding/Bergkirchen (DE); DYKHUIS, Matthias, 80809 München (DE)
(74) Vertreter: Wilhelm, Ludwig
(86) Internationale Anmeldenummer: PCT/EP2016/073714
(87) Internationale Veröffentlichungsnummer: WO 2017/063922

(56) Entgegenhaltungen:
- DE-A1- 10 024 620
- DE-A1-102006 009 900
- DE-A1-102006 020 696
- DE-A1-102007 050 332
- JP-A- 2010 167 662
- JP-U- S6 349 914
- US-A1- 2005 156 352
- Anonymous: "Liquid Injection Molding - Dosiersysteme", , 29. Januar 2015 (2015-01-29), Seiten 1-5, XP055315131, Gefunden im Internet: URL:http://www.elmet.com/upload/content/07 _DOWNLOAD/dosiersystem-d.pdf [gefunden am 2016-10-31]

## Beschreibung

Die Erfindung betrifft eine Spritzgießmaschine aufweisend eine Beschichtungsanlage zur Herstellung von beschichteten Spritzgießteilen nach dem Oberbegriff des Anspruchs 1.

Eine gattungsgemäße Spritzgießmaschine aufweisend eine Beschichtungsanlage, z. B. eine RIM-Anlage, ist aus der EP 1 993 802 B1 oder aus deren prioritätsbegründender deutschen Offenlegungsschrift DE 10 2006 009 900 A1 bekannt. Als RIM-Beschichtungsanlage wird eine Reaction-Injection-Molding-Anlage (RIM-Anlage) verstanden, bei der mittels eines Mischkopfes ein zweikomponentiges reaktives Gemisch in eine Kavität eingespritzt wird und innerhalb der Kavität, insbesondere als Oberflächenbeschichtung für einen bereits vorgeformten Spritzgießrohling, reaktiv aushärtet und somit eine Oberflächenbeschichtung bildet. Grundsätzlich ist eine solche Beschichtungstechnik, die beispielsweise auf der Basis von PUR, PUA- oder Lacken, insbesondere Acryllacken stattfindet, bereits bekannt. Hierzu wird beispielsweise auch auf den Artikel "Hochwertige Premiumoberfläche aus Spritzgieß und Reaktionstechnik" aus Kunststoffe 10/2004, Seite 180 bis 186, verwiesen.

Eine geeignete Spritzgießmaschine, mit der ein solches Beschichtungsverfahren durchgeführt werden kann, offenbaren die EP 1 993 802 B1 oder die DE 10 2006 009 900 A1. Bei einer solchen Spritzgießmaschine handelt es sich beispielsweise um eine Zwei-Platten-Spritzgießmaschine, bei der auf der Seite einer festen Werkzeugaufspannplatte ein aus dem Stand der Technik bekanntes Einspritzaggregat für thermoplastische Kunststoffe vorhanden ist. An der beweglichen Werkzeugaufspannplatte sitzt ein Mischkopf, welcher von einer neben der Spritzgießmaschine angeordneten Behältereinheit sowie mit einem Dosiermodul für Polyol- und Isocyanatkomponenten einer RIM-Anlage verbunden ist. Auf einem Schlitten, der an der Rückseite, das heißt an der Seite, die von der Werkzeugkavität abgewandt ist, angeordnet ist, ist ein verfahrbarer Schlitten befestigt, der einen Mischkopf trägt. Der Mischkopf kann mittels des Schlittens in eine entsprechende Ausnehmung in der Kavität und in eine korrespondierende Ausnehmung in der beweglichen Werkzeugaufspannplatte eingesetzt werden. Der Mischkopf wird über Hochdruckschläuche mit den Reaktionskomponenten der RIM-Beschichtung versorgt. Derartige Hochdruckschläuche sind beispielsweise für Polyol- und/oder Isocyanatkomponenten ausgelegt. Ein solches Maschinenlayout hat sich bewährt. Es ist jedoch erwünscht, die Dosiergenauigkeit einer solchen RIM-Beschichtungsanlage zu verbessern. Es wurde in Einzelfällen festgestellt, dass z. B. bei besonders geringen Einspritzgewichten der Reaktionskomponenten bei einer derartigen Anordnung der RIM-Beschichtungsanlage diesbezüglich unbefriedigende Ergebnisse erzielt werden.

Aus der WO 03/013824 ist insbesondere aus der dortigen Figur 4 ebenso eine gattungsgemäße Spritzgießmaschine bekannt. Auch bei dieser Spritzgießmaschine befindet sich das RIM-Beschichtungsaggregat, das heißt die Behälter für die Ausgangskomponenten, die Speisepumpen und die Hochdruckpumpen, auf einer separaten Palette, die beispielsweise in der Darstellung gemäß Figur 4 dieser Druckschrift gegenüberliegend zur Thermoplasteinspritzeinheit in Verlängerung des Maschinenbetts angeordnet ist. Ein Mischkopf sitzt in der beweglichen Werkzeugaufspannplatte und/oder in der die Beschichtungskavität bildenden Werkzeughälfte. Auch ein solches Maschinenlayout führt in Einzelfällen zu unbefriedigenden Dosiergenauigkeiten und somit zu Qualitätsproblemen beim fertig beschichteten Teil.

Aufgabe der Erfindung ist es daher, eine Spritzgießmaschine aufweisend eine Beschichtungsanlage, insbesondere eine RIM-Beschichtungsanlage anzugeben, mit der ein deutlich verbessertes Dosierverhalten der RIM-Beschichtungsanlage erreichbar ist und somit eine verbesserte Bauteilqualität erzielbar ist.

Des Weiteren ist es Aufgabe der Erfindung, ein platzoptimiertes Maschinenlayout für eine Spritzgießmaschine der eingangs genannten Art anzugeben, um bei einer optimierten Aufstellfläche eine höhere Wirtschaftlichkeit der Anlage hinsichtlich des erforderlichen Platzbedarfes zu erreichen.

Diese Aufgaben werden mit einer Spritzgießmaschine mit den Merkmalen des Anspruchs 1 gelöst. Vorteilhafte Ausführungsformen sind in den Unteransprüchen angegeben.

Erfindungsgemäß wird eine gattungsgemäße Spritzgießmaschine, die eine Beschichtungsanlage, insbesondere eine RIM-Beschichtungsanlage besitzt, wobei die Spritzgießmaschine zumindest eine feste Werkzeugaufspannplatte und eine bewegliche Werkzeugaufspannplatte zur Befestigung von Formwerkzeughälften zumindest eines Formwerkzeugs besitzt und die Beschichtungsanlage erste druckerzeugende und/oder erste druckführende Mittel für Beschichtungskomponenten auf einen ersten niedrigeren Druckniveau (p₁) besitzt und zweite druckerzeugende und/oder zweite druckführende Mittel für die Beschichtungskomponenten auf einem zweiten höheren Drucknlveau (p₂) besltzl, erflndungsgemäß dadurch weltergeblldet, dass zumlndest alle zweiten druckerzeugenden und alle zweiten druckführenden Mittel mit der beweglichen Werkzeugaufspannplatte entlang eines Verfahrweges der beweglichen Werkzeugaufspannplatte mitfahrbar gekoppelt sind.

Es findet somit eine Aufspaltung der Beschichtungsanlage in einem Niederdruckteil (NDT) und einem Hochdruckteil (HDT) statt. Erfindungsgemäß wurde erkannt, dass Beschichtungsanlagen, die im Stand der Technik üblicherweise kompakt und hoch integriert ausgebildet sind und auf einer Palette untergebracht sind, die Vorratsbehälter, Niederdruckspeisepumpen und Hochdruckpumpen enthalten, zur Erhöhung der Qualität der Spritzgussteile getrennt werden sollen. Es wird erfindungsgemäß vorgeschlagen, auch entgegen der üblichen fachmännischen Vorgehensweise, nämlich die bewegte Masse der beweglichen Werkzeugaufspannplatte so gering wie möglich zu halte, um Zykluszeiten einzusparen, gerade die Hochdruckpumpen, die hinsichtlich ihrer Baugröße gegenüber den Niederdruckspeisepumpen einer Beschichtungsanlage deutlich größer und schwerer sind, mitbewegbar an die bewegbare Werkzeugaufspannplatte zu koppeln. Hierzu kommt üblicherweise eine mechanische Verbindung auf einem Plateau in Frage, welches auf der Rückseite der beweglichen Werkzeugaufspannplatte mit dieser verbunden ist und gegebenenfalls über eine separate Abstützung gegenüber dem Maschinenbett verfügt. Kern der Erfindung ist also, die gesamten hochdruckführenden oder hochdruckerzeugenden Mittel der Beschichtungsanlage an die bewegliche Werkzeugaufspannplatte oder zumindest an diejenige Aufspannplatte mechanisch zu koppeln, an der eine Werkzeugkavität angebracht ist, die zur Beschichtung eines Spritzgussrohlings geeignet ist. Eine solche Anordnung sämtlicher hochdruckführenden Bauteile, also sämtliche Bauteile, die entweder das zweite Druckniveau p₂ erzeugen oder führen, an einer beweglichen Werkzeugaufspannplatte hat zudem den Vorteil, dass Verbindungsleitungen zwischen den Hochdruckpumpen und den Filtern bzw. zwischen Filtern und dem Mischkopf vollständig oder zumindest überwiegend starr verrohrt ausgebildet werden können, das heißt mit starren Rohrleitungen, z. B. aus Stahl, gebildet werden können.

Je nach Anordnung und Konstruktion des Mischkopfes kann es erforderlich sein, in unmittelbarer Nähe des Mischkopfes eine Schottplatte vorzusehen, bis zu der eine starre Verrohrung führen kann. Ab der Schottplatte kann es erforderlich sein, ein relativ kurzes Stück mittels flexiblen Hochdruckschläuchen zu überbrücken. Die Länge dieser Hochdruckschläuche muss allerdings nur so groß gemessen werden, dass zu Wartungszwecken ein Ausbau des Mischkopfes aus der Formwerkzeughälfte möglich ist. Je nachdem, ob der Mischkopf zu Wartungszwecken in eine bestimmte Richtung bewegt werden muss, kann es auch durch geeignete Wahl der Hochdruckanschlüsse am Mischkopf gelingen, die starre Verrohrung bis zum Mischkopf auszugestalten und somit die Dosiergenauigkeit weiter zu erhöhen.

Erfindungsgemäß wurde nämlich erkannt, dass die hochdruckführenden flexiblen Schläuche, die von einem Hochdruckteil der Beschichtungsanlage, der neben der Spritzgießmaschine angeordnet ist, zum Mischkopf führen, durch elastische Dehnungen und/oder andere Verformungen einen erheblichen Einfluss auf die Dosiergenauigkeit des einzuspritzenden Beschichtungsmaterials, sei es der Komponente 1 oder der Komponente 2, besitzt. Als wesentlicher erfindungsgemäßer Punkt ist also auch anzusehen, dass die bisher verwendeten flexiblen Schläuche durch eine möglichst große Länge an starrer Verrohrung ersetzt werden, soweit die flexiblen Schläuche hochdruckführende Schläuche sind.

Als Spritzgießmaschinen, die zur Ausbildung einer erfindungsgemäßen Spritzgießmaschine geeignet sind, kommen Mehrkomponenten-Spritzgießmaschinen z. B. eine Zwei-Platten-Spritzgieß-maschine mit einer Drehtellereinrichtung oder eine DreiPlatten-Spritzgießmaschine mit einer Wendeplatteneinheit in Frage.

Derartige Spritzgießmaschinen können in einfacher Art und Weise durch Abbau eines der vorhandenen Thermoplastspritaggregate umgebaut werden und entsprechenden Montageraum für Komponenten der Beschichtungsanlage anbieten.

Als Beschichtungsanlage kommen bevorzugt RIM-Beschichtungs-anlagen, also Beschichtungsanlagen die aus zwei miteinander reagierenden Komponenten ein Beschichtungsmaterial erzeugen, in Frage. Hierzu kommen insbesondere PU-, PUR-, PUA- oder Lackbeschichtungsanlagen, insbesondere eine Acryllackbeschichtungsanlage, in Frage.

Die Beschichtungsanlage kann aber auch eine Einkomponenten-Beschichtungsanlage sein.

In einer weiteren bevorzugten Ausführungsform ist die Spritgießmaschine dadurch weitergebildet, dass die Beschichtungsanlage ein Niederdruckteil besitzt, welcher zumindest einen Vorratsbehälter für die zumindest eine Beschichtungskomponente und zumindest eine Speisepumpe für die Beschichtungskomponente besitzt und einen Hochdruckteil aufweist, der je Beschichtungskomponente zumindest eine Hochdruckpumpe und im Falle einer Mehrkomponenten-Beschichtungsanlage einen Mischkopf zum Mischen von zumindest zwei Komponenten des Beschichtungsmaterials und im Falle einer Einkomponenten-Anlage einen Injektor aufweist.

Zweckmäßigerweise ist eine freie Leitungslänge zwischen Hochdruckpumpen und/oder Filtern und dem Mischkopf zumindest bis auf für Wartungszwecke notwendige flexible Schläuche mittels starren Rohren ausgebildet. Die starren Rohre haben dabei den Vorteil, dass geringere Dehnungen z. B. unter pulsartig auftretenden Hochdruckspritzen stattfinden und somit beim Einspritzen der Komponenten in eine Beschichtungskavität die vorbestimmten und vorausgewählten Dosiermengen des Beschichtungsmaterials genauer eingehalten werden. Hierdurch wird die eingespritzte Materialmenge des Beschichtungsmaterials genauer reproduzierbar wiederholbar gestaltet, sodass eine Qualitätssteigerung für die hergestellten Bauteile mit der erfindungsgemäßen Spritzgießmaschine realisierbar ist.

Als zweckmäßige Ausführungsform ist zur Aufnahme des Hochdruckteils der Beschichtungsanlage ein Schlitten vorgesehen, der mit der beweglichen Werkzeugaufspannplatte verbunden ist und gegenüber einem Maschinenbett der Spritzgießmaschine verschieblich gelagert abgestützt ist.

Zweckmäßigerweise ist der Niederdruckteil der Beschichtungsanlage auf dem Maschinenbett der Spritzgießmaschine angeordnet oder neben der Spritzgießmaschine z. B. auf einer speziellen Palette aufgestellt angeordnet.

Der Niederdrucktell und der verfahrbare Huchdruckteil der Beschichtungsanlage ist mit flexiblen Schläuchen, z. B. Niederdruckschläuchen zur Führung der Beschichtungskomponenten, fluidisch verbunden. Diese flexiblen Schläuche sind allerdings Teil des Niederdruckteils und sind somit insbesondere was pulsierende Belastung angeht auch nicht so stark Dehnungen oder Druckspritzen unterworfen. Somit sind die die Relativbewegung zwischen Niederdruckteil und Hochdruckteil ausgleichenden Schläuche bevorzugt Niederdruckschläuche, deren flexibles Verhalten und deren Dehnungsverhalten unter impulsartiger Belastung keinen wesentlichen Einfluss auf die Dosiergenauigkeit der Beschichtungskomponenten hat.

Weiterhin zweckmäßig ist es, dass dem Hochdruckteil der Beschichtungsanlage zumindest eine Farbdosiereinrichtung zugeordnet ist und die Farbdosiereinrichtung nicht mit der beweglichen Werkzeugaufspannplatte mitbewegbar angeordnet ist.

Es kann auch zweckmäßig sein, mittels einem Niederdruckteil einer Beschichtungsanlage zwei oder mehrere erfindungsgemäße Spritzgießmaschinen, das heißt deren Hochdruckteil der Beschichtungsanlage, zu versorgen. Hierzu weisen die Niederdruckleitungen der Beschichtungsanlagen zweckmäßigerweise jeweils eine Abzweigung auf, wobei ein einziger Niederdruckteil mit zwei oder mehreren Hochdruckteilen zweier oder mehrerer Spritzgießmaschinen verbunden ist.

Somit gelingt es, mit einem ausreichend dimensionierten Niederdruckteil mehrere Spritzgießmaschinen bzw. deren Hochdruckteile der Beschichtungsanlage mit ein und derselben Charge der Beschichtungskomponenten aus einem gemeinsamen Niederdruckteil zu versorgen.

Weiterhin ist es zweckmäßig, dass die Spritzgießmaschine zu einer Mehrkomponenten-Thermoplast-Spritzgießmaschine, die zwei Einspritzaggregate aufweist, rückrüstbar ist. Beispielsweise ist eines der Einspritzaggregate als sog. A-Spritze und eines als sog. F-Spritze angeordnet. Beispielsweise ist die Beschichtungsanlage an Stelle der F-Spritze angeordnet. Durch Ersatz der Beschichtungsanlage durch die F-Spritze ist die Spritzgießmaschine wieder zur Herstellung von MehrkomponentenSpritzgießteilen rückrüstbar.

Wellerhin ist es zweckmäßig, dass auf der Selte des Thermoplasteinspritzaggregates ein zusätzliches Einspritzaggregat in Z-, H-, L- oder V-Stellung angebracht werden kann. So kann entweder eine weitere Komponente in einer separaten Kavität gespritzt werden, oder es kann beispielsweise durch einen weiteren Umsetzvorgang eine zusätzliche Komponente an das zuvor gespritzte und beschichtete Bauteil angespritzt werden.

Es ist somit zweckmäßig, bei oder neben der ersten Thermoplasteinspritzeinheit zumindest eine weitere Thermoplasteinspritzeinheit anzubringen.

Weiterhin kann es zweckmäßig sein, dass der Mischkopf eine auch für ein Einspritzaggregat vorgesehene zentrale Öffnung der beweglichen Werkzeugaufspannplatte durchgreifend mit der Formwerkzeughälfte verbunden ist.

Im Folgenden wird die Erfindung anhand der Zeichnung beispielhaft näher erläutert. Es zeigen:
- Figur 1:: schematisch eine Seitenansicht auf eine erste Ausführungsform der erfindungsgemäßen Spritzgießmaschine;
- Figur 2:: eine Draufsicht auf die Spritzgießmaschine gemäß Figur 1;
- Figur 3:: eine Draufsicht auf eine zweite Ausführungsform der erfindungsgemäßen Spritzgießmaschine;
- Figur 4:: eine Draufsicht auf zwei Spritzgießmaschinen gemäß Figur 1 versorgt mit einem gemeinsamen Niederdruckteil einer Beschichtungsanlage;
- Figur 5:: schematisch eine Seitenansicht auf eine weitere Ausführungsform der erfindungsgemäßen Spritzgießmaschine;
- Figur 6:: eine Draufsicht auf die Spritzgießmaschine gemäß Figur 5;
- Figur 7:: schematisch eine Seitenansicht auf eine weitere Ausführungsform der erfindungsgemäßen Spritzgießmaschine,
- Figur 8:: schematisch eine Draufsicht auf eine geringfügig abgewandelte Ausführungsform der Spritzgießmaschine gemäß Figur 1 und
- Figur 9:: eine weitere Ausführungsform einer erfindungsgemäßen Spritzgießmaschine mit einer abgewandelten Position eines Mischkopfes.

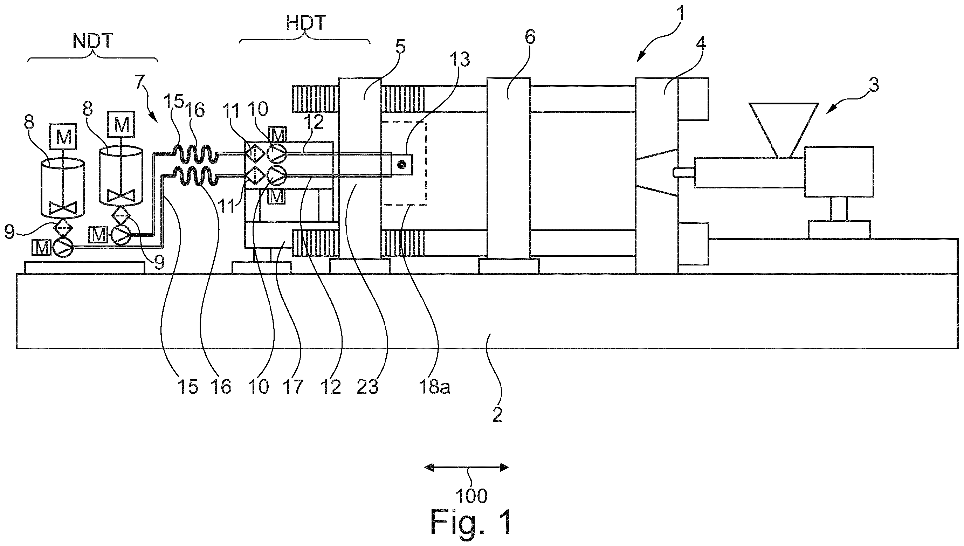

Eine erste Ausführungsform einer erfindungsgemäßen Spritzgießmaschine 1 zeigt Figur 1. Auf einem Maschinenbett 2 ist in bekannter Art und Weise ein Einspritzaggregat 3 angeordnet und wirkt mit einer festen Werkzeugaufspannplatte 4 zusammen. Die Spritzgießmaschine 1 gemäß Figur 1 ist als Drei-Platten-Spritzgießmaschine ausgebildet und besitzt zudem eine bewegliche Werkzeugaufspannplatte 5 sowie eine Wendeplatteneinheit 6.

Des Weiteren besitzt die erfindungsgemäße Spritzgießmaschine 1 gemäß Figur 1 eine Beschichtungsanlage 7. Die Beschichtungsanlage 7 besitzt einen Niederdruckteil NDT und einen Hochdruckteil HDT. Dem Niederdruckteil NDT sind Vorratsbehälter 8 für Beschichtungskomponenten und Speisepumpen 9 zum Transport der Beschichtungskomponenten auf einem ersten niedrigeren Druckniveau p₁ zugeordnet.

Der Niederdruckteil NDT ist in der Ausführungsform gemäß Figur 1 auf einem verlängerten Maschinenbett 2 gegenüberliegend vom Einspritzaggregat 3 angeordnet.

Der Hochdruckteil HDT besitzt Hochdruckpumpen 10, wobei jeder Beschichtungskomponente eine Hochdruckpumpe 10 zugeordnet ist. Zudem sind Filter 11 vorgesehen, die den Hochdruckpumpen 10 vorgeschaltet sind und somit noch dem Niederdruckteil NDT zuzuordnen sind. Die Hochdruckpumpen 10 stehen über Hochdruck-Verbindungsleitungen 12 mit einem Mischkopf 13 in Verbindung. Der Mischkopf 13 ist an einer Werkzeughälfte (nicht gezeigt), die an der beweglichen Werkzeugaufspannplatte 5 angebracht ist, angebaut. Die Hochdruckpumpen 10 sind Mittel, die ein zweites höheres Druckniveau p₂ erzeugen, die Hochdruck-Verbindungsleitungen 12 und der Mischkopf 13 sind Mittel zum Führen von Medien auf dem höheren zwelten Druckniveau p₂

Der Niederdruckteil NDT und der Hochdruckteil HDT sind mit NiederdruckVerbindungsleitungen 15 miteinander verbunden, wobei zumindest ein Teil der Niederdruckverbindungsleitungen 15 aus flexiblen Leitungen, z. B. aus Niederdruckschläuchen 16, ausgebildet ist.

Der Hochdruckteil HDT der Beschichtungsanlage 7 ist fest auf einem Schlitten 17 angeordnet, wobei der Schlitten 17 fest mit der beweglichen Werkzeugaufspannplatte 5 gekoppelt ist. Der Schlitten 17 ragt dabei von der beweglichen Werkzeugaufspannplatte 5 ein Stück in Richtung zum freien Ende des Maschinenbetts 2 bzw. zum Niederdruckteil NDT der Beschichtungsanlage 7 und ist gegebenenfalls gegenüber dem Maschinenbett 2 abgestützt. Der Hochdruckteil HDT ist somit mit seinen zweiten, hochdruckerzeugenden und/oder hochdruckführenden Mitteln 10, 12, 13 mit der beweglichen Werkzeugaufspannplatte 5 mitbewegbar angeordnet. Die hochdruckerzeugenden und hochdruckführenden Mittel 10, 12, 13 sind für die Erzeugung/das Führen von Beschichtungskomponenten auf einen zweiten, höheren Druckniveau p2 ausgelegt. Die Verbindungsleitungen 12 sind dabei bevorzugt als starre Rohrleitungen ausgebildet. Dies weiterhin bevorzugt über den weitaus größten Teil ihrer Länge. Lediglich ein für Wartungszwecke notwendiges Teilstück muss gegebenenfalls aus einem flexiblen Hochdruckschlauch (nicht gezeigt in Figur 1) ausgebildet werden, um den Mischkopf 13 aus einer Werkzeughälfte 18a an der beweglichen Werkzeugaufspannplatte 5 zu Wartungszwecken entnehmen zu können. Als niederdruckerzeugende und niederdruckführende Mittel sind die Vorratsbehälter 8, die Speisepumpen 9 und die Niederdruckverbindungsleitungen 15 sowie die Niederdruckschläuche 16 zu verstehen.

Ein Verfahrweg der beweglichen Werkzeugaufspannplatte 5 ist mit dem Bezugszeichen 100 schematisch dargestellt.

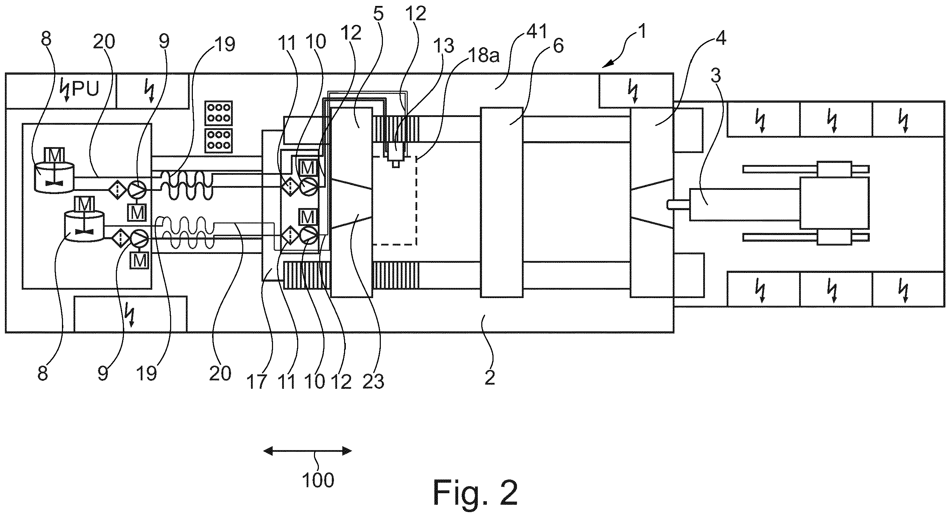

In Figur 2 ist die erfindungsgemäße Spritzgießmaschine 1 gemäß Figur 1 in der Draufsicht dargestellt. Insoweit entspricht der Aufbau der Spritzgießmaschine gemäß Figur 1 identisch dem der Darstellung gemäß Figur 2, wobei jedoch in Figur 2 deutlich wird, dass die Verbindungsleitungen 12, die als Hochdruckleitungen ausgebildet sind, von einer Rückseite der beweglichen Werkzeugaufspannplatte 5 um diese herum in einen Zwischenraum zwischen der Wendeplatteneinrichtung 6 und der beweglichen Werkzeugaufspannplatte 5 geführt sind. In diesem Zwischenbereich ist der Mischkopf 13 seitlich in die in Figur 2 gestrichelt dargestellte Formwerkzeughälfte 18a eingesetzt. Die übrigen Bestandteile entsprechen identisch denen in Figur 1.

Zusätzlich zu den Verbindungsleitungen 12 sind vom Mischkopf 13 aus direkt über zumindest abschnittsweise flexibel ausgebildete Leitungsabschnitte 19 Rücklaufleitungen 20 für jede Beschichtungskomponente zurück in deren zugehörigem Vorratsbehälter 8 angeordnet. Die Rücklaufleitungen 20 führen nicht benötigte Beschichtungskomponente vom Mischkopf 13 auf einem niedrigen Druckniveau zurück zum Vorratsbehälter 8. Insofern kann in den Rücklaufleitungen 20 ohne Weiteres ein flexibles Niederdruckschlauchstück als flexibler Abschnitt 19 vorgesehen sein. Außerdem kann - auch wenn in den Rücklaufleitungen 20 ein höheres Druckniveau vorliegen würde - dies ohne Weiteres mit Hochdruckschläuchen bewältigt werden, da in den Rücklaufleitungen 20 transportierte Beschichtungskomponenten keinen Einfluss mehr auf die Dosiergenauigkeit im Mischkopf 13 haben und somit ein Pulsieren oder Dehnen der Hochdruckschläuche der flexiblen Abschnitte 19 keine Auswirkung auf die Qualität des Bauteiles mehr hat.

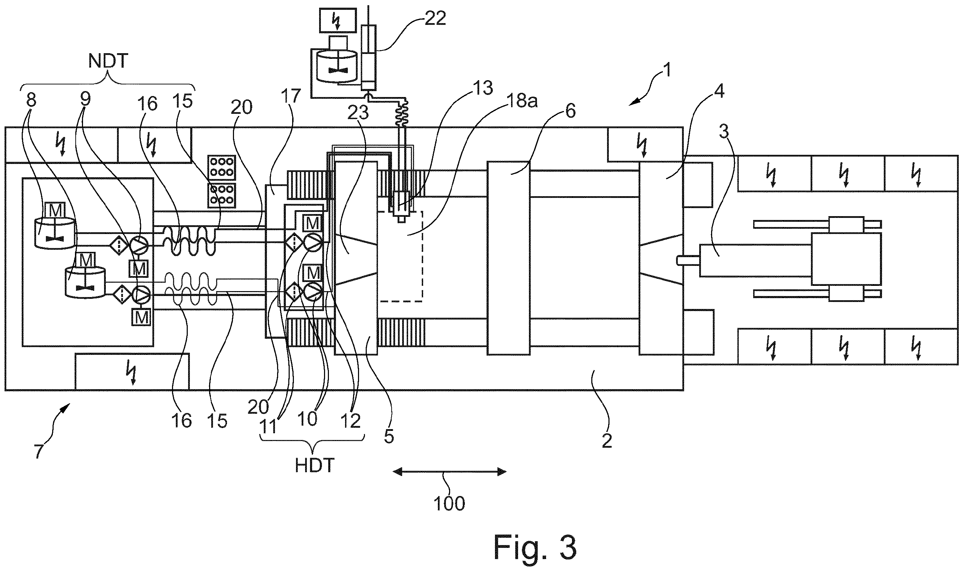

Die Figur 3 zeigt in der Draufsicht eine modifizierte Spritzgießmaschine 1 gemäß der Figuren 1 und 2 in einer Ausführungsform, welche eine Farbdosiereinrichtung 22 aufweist. Im Übrigen ist der Aufbau der Ausführungsform gemäß Figur 3 identisch zum Aufbau gemäß der Figuren 1 und 2. Mit der Farbdosiereinrichtung 22 ist es möglich, dem Mischkopf 13 Farbpigmente dosiert zuzuführen, welche im Mischkopf 13 mit den Komponenten des Beschichtungsmaterials vermischt werden und in geeigneter Mischung über den Mischkopf 13 der Formwerkzeughälfte 18a zugeführt werden.

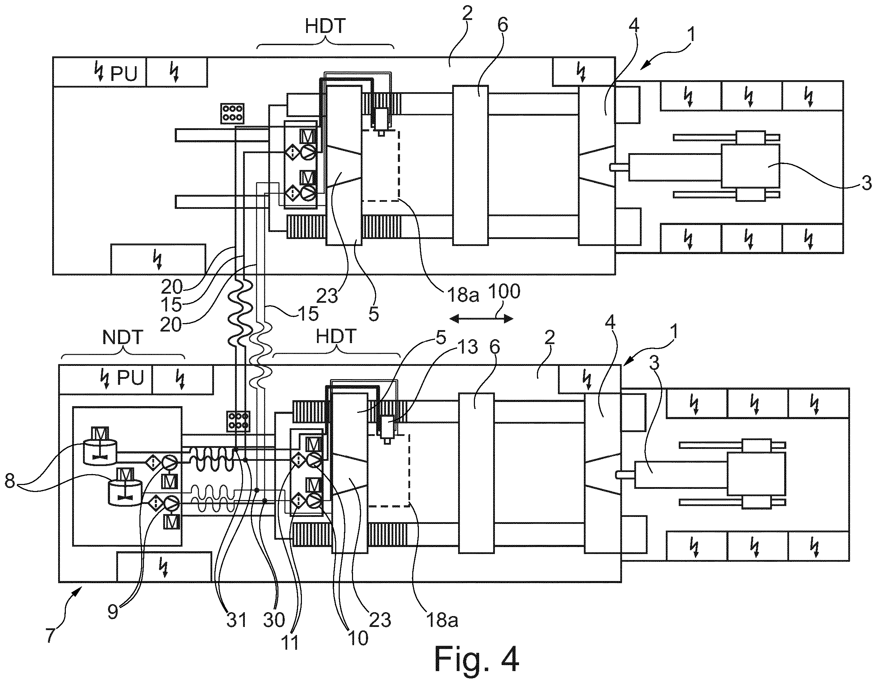

Eine weitere Ausführungsform der Erfindung zeigt Figur 4 in der Draufsicht. Bei der in der Figur 4 dargestellten Anordnung sind zwei Spritzgießmaschinen 1 nebeneinander angeordnet. Eine Spritzgießmaschine 1 besitzt einen Niederdruckteil NDT der Beschichtungsanlage 7, wobei jede der Spritzgießmaschinen 1 einen Hochdruckteil HDT der Beschichtungsanlage 7 besitzt, welcher jeweils erfindungsgemäß mit der beweglichen Werkzeugaufspannplatte 5 entlang des Verfahrweges 100 mitbewegbar angeordnet ist.

Die Niederdruckverbindungsleitungen 15 weisen Abzweigungen 30 auf. Die Rücklaufleitungen 20 besitzen Abzweigungen 31, sodass die Niederdruckverbindungsleitungen 15 sowie die Rücklaufleitungen 20 derjenigen Spritzgießmaschine 1 die keinen Niederdruckteil NDT besitzt, mit den Rücklaufleitungen 20 und den Verbindungsleitungen 12 der anderen Spritzgießmaschine verbindbar sind. Somit kann also mit einem einzigen Niederdruckteil NDT einer Beschichtungsanlage 7 bewerkstelligt werden, dass mehrere Hochdruckteile HDT mehrerer Spritzgießmaschinen 1 von einem einzigen Niederdruckteil NDT versorgt werden können.

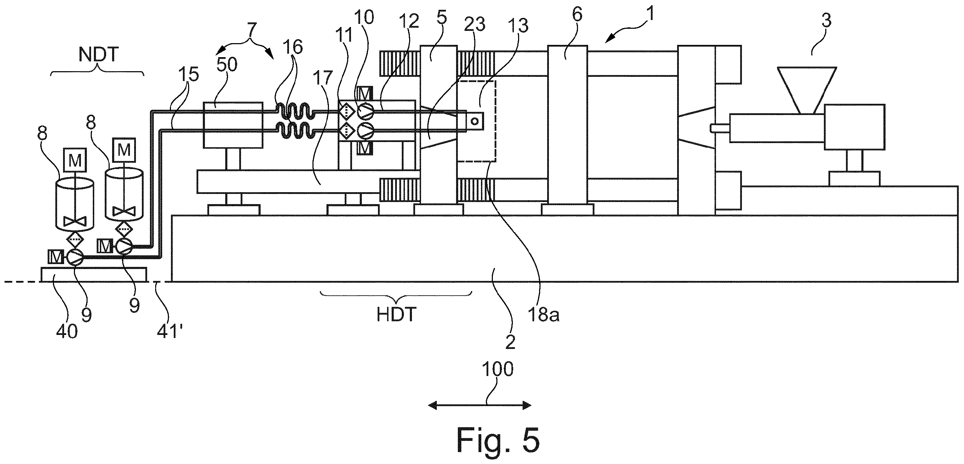

Bei einer weiteren Ausführungsform einer erfindungsgemäßen Spritzgießmaschine 1 (Figur 5) ist der Niederdruckteil NDT der Beschichtungsanlage 7 auf einer separaten Palette 40 z. B. auf einem Hallenboden 41 aufgestellt. Ein verlängertes Maschinenbett 2 ist hierfür nicht erforderlich.

Bei der Ausführungsform gemäß Figur 5 handelt es sich um eine Spritzgießmaschine, bei der ein zweites Spritzaggregat auf dem Schlitten 17 mit der beweglichen Werkzeugaufspannplatte 5 mitfahrbar angeordnet werden kann (F-Spritze). Schematisch ist in der Figur 5 die mögliche Anordnung einer F-Spritze durch den Verbleib der Antriebseinheit 50 dieser F-Spritze dargestellt. Der Schlitten 17 ist gegenüber der Ausführungsformen gemäß der Figuren 1 bis 4 verlängert ausgebildet. Der Hochdruckteil HDT der Beschichtungsanlage 7 befindet sich analog zu den Ausführungsformen gemäß der Figuren 1 bis 4 direkt hinter der beweglichen Werkzeugaufspannplatte 5.

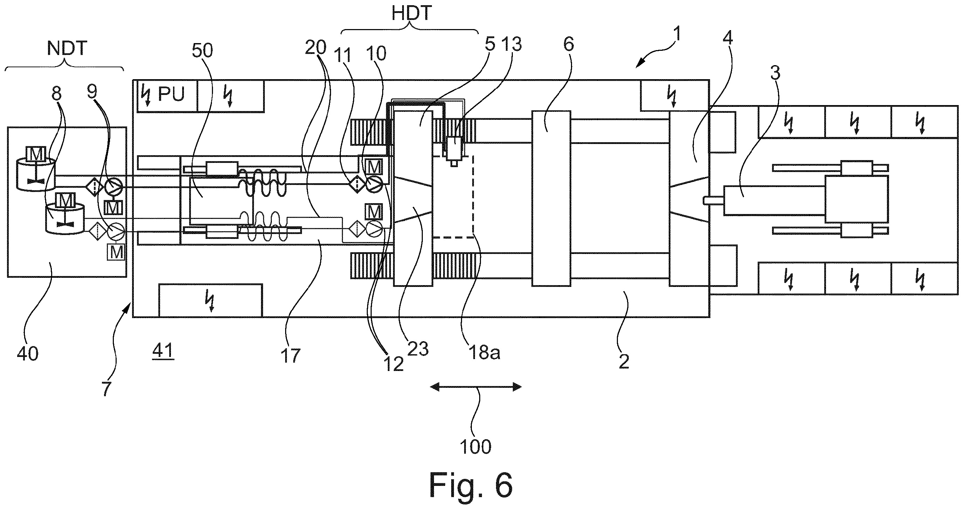

Die Ausführungsform gemäß Figur 5 ist in der Figur 6 in der Draufsicht dargestellt. Weitere Modifikationen sind aus der Draufsicht nicht erkennbar.

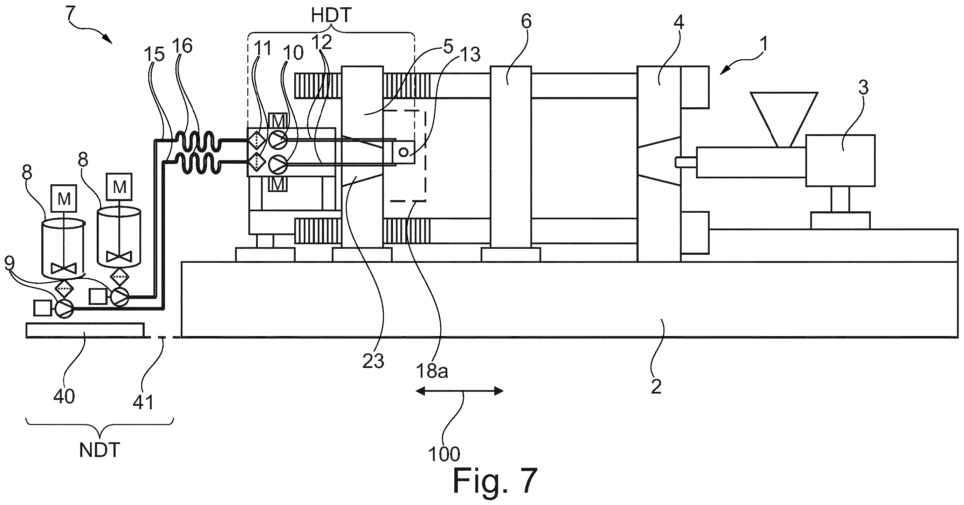

Eine weitere Ausführungsform der erfindungsgemäßen Spritzgießmaschine 1 zeigt Figur 7. Die Spritzgießmaschine 1 besitzt ein verkürztes Maschinenbett 2 und entspricht hinsichtlich des Aufbaus im Wesentlichen der Ausführungsformen gemäß den Figuren 1 bis 4, wobei jedoch die Anordnung des Niederdruckteils NDT der Beschichtungsanlage 7 analog zur Ausführungsform gemäß der Figur 6 auf der separaten Palette 40 direkt auf dem Hallenboden 41 erfolgt.

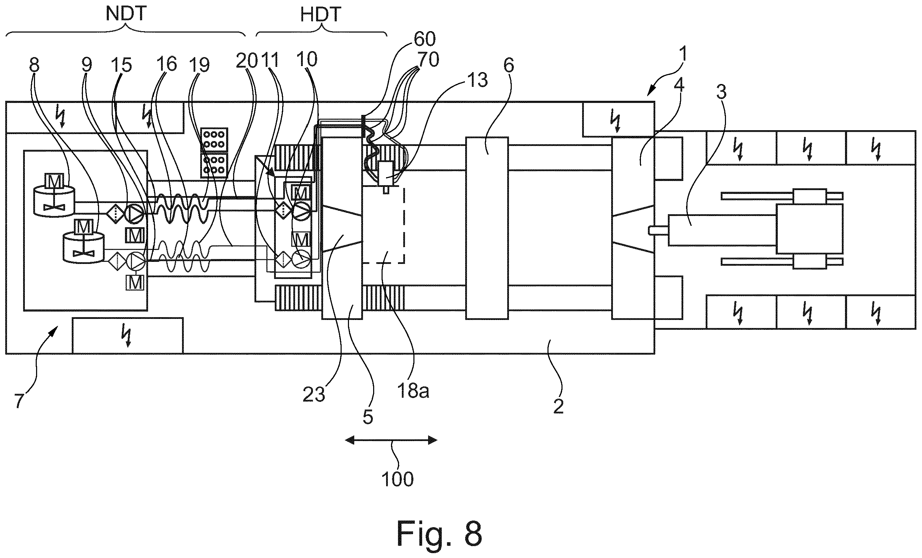

Eine weitere Ausführungsform der erfindungsgemäßen Spritzgießmaschine zeigt Figur 8. Die Ausführungsform gemäß Figur 8 entspricht in weiten Teilen den Ausführungsformen gemäß der Figuren 1 bis 4. Hinsichtlich der Leitungsführung der hochdruckführenden Mittel innerhalb des Hochdruckteiles HDT der Beschichtungsanlage 7 ist diese Ausführungsform modifiziert. Die Verbindungsleitungen 12 (Hochdruckverbindungsleitungen) und die Rücklaufleitungen 20 sind bis zu einer Schottplatte 60 als starre Rohrleitungen geführt. Von der Schottplatte 60 bis zum Mischkopf 13 sind diese Leitungen als flexible Hochdruckschläuche 70 mit lediglich geringer Länge ausgebildet. Dies kann vorteilhaft sein wenn für Wartungszwecke, z. B. für den Fall eines erforderlichen Ausbaus des Mischkopfs 13 aus der Formwerkzeughälfte 18a eine Bewegung des Mischkopfs 13 relativ zur beweglichen Werkzeugaufspannplatte 5 erforderlich ist. Im Übrigen entspricht der Aufbau der Ausführungsform gemäß Figur 8 den bereits beschriebenen Ausführungsformen gemäß der Figuren 1 bis 4.

Selbstverständlich können die vorbeschriebenen Ausführungsformen und die in deren Zusammenhang beschriebenen Merkmale auch untereinander ausgetauscht werden. So ist es beispielsweise selbstverständlich möglich, bei einer Ausführungsform gemäß der Figur 6 (aufweisend einen langen Schlitten 17) trotzdem das Maschinenbett 2 zu verlängern um den Niederdruckteil NDT auf diesem anzubringen. Insoweit sind die im Zusammenhang mit den unterschiedlichen Ausführungsformen der Figuren 1 bis 8 beschriebenen Merkmale mit fachmännischen Wissen und Können austauschbar und auf andere Ausführungsformen übertragbar.

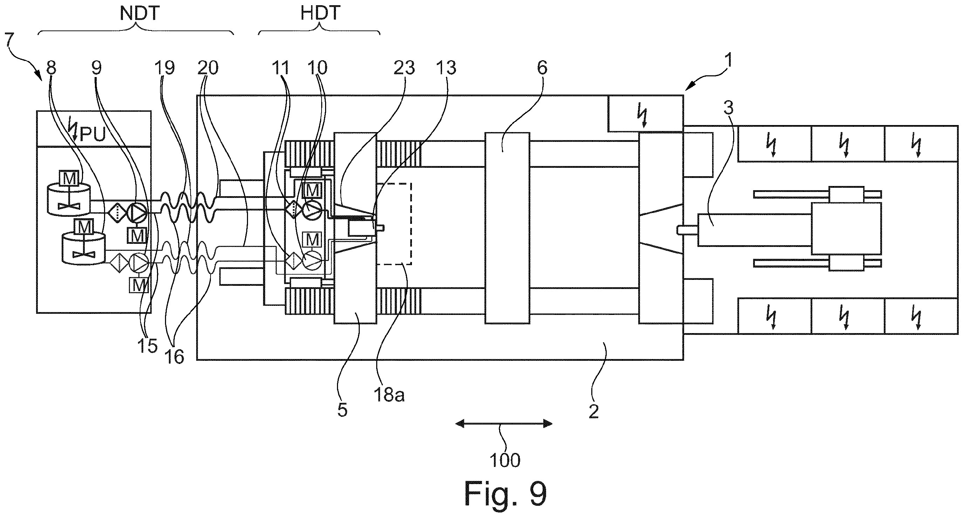

Weiterhin ist es möglich, dass der Mischkopf 13 eine Öffnung 23 in der beweglichen Werkzeugaufspannplatte 5 durchgreifend mit der Formwerkzeughälfte 18a verbunden ist (Fig. 9). Bei einer derartigen Anordnung entfällt eine Verrohrung/Leitungsführung zwischen den Hochdruckpumpen 10 und dem Mischkopf 13, welche um die bewegliche Werkzeugaufspannplatte 5 herumgeführt ist. Somit lässt sich der Hochdruckteil HDT der Beschichtungsanlage 7 sehr kompakt aufbauen.

### Bezugszeichenliste

- 1: Spritzgießmaschine
- 2: Maschinenbett
- 3: Einspritzaggregat
- 4: feste Werkzeugaufspannplatte
- 5: bewegliche Werkzeugaufspannplatte
- 6: Wendeplatteneinheit
- 7: Beschichtungsanlage
- 8: Vorratsbehälter
- 9: Speisepumpen
- 10: Hochdruckpumpen
- 11: Filter
- 12: Verbindungsleitungen
- 13: Mischkopf
- 15: Niederdruckverbindungsleitungen
- 16: Niederdruckschläuche
- 17: Schlitten
- 18a: Formwerkzeughälfte
- 19: flexible Leitungsabschnitte
- 20: Rücklaufleitungen
- 22: Farbdosiereinrichtung
- 23: Öffnung
- 30: Abzweigungen
- 31: Abzweigungen
- 40: Palette
- 41: Hallenboden
- 50: Spritzaggregat (F-Spritze)
- 60: Schottplatte
- 70: Hochdruckschläuche
- 100: Verfahrweg

- NDT: Niederdruckteil
- HDT: Hochdruckteil

## Patentansprüche

1. Spritzgießmaschine aufweisend eine Beschichtungsanlage (7), wobei die Spritzgießmaschine (1) zumindest eine feste Werkzeugaufspannplatte (4) und eine bewegliche Werkzeugaufspannplatte (5) zur Befestigung von Formwerkzeughälften zumindest eines Formwerkzeugs aufweist und die Beschichtungsanlage (7) erste druckerzeugende und/oder erste druckführende Mittel (8; 9; 15; 16) für Beschichtungskomponenten auf einem ersten niedrigeren Druckniveau (p₁) besitzt und zweite druckerzeugende und/oder zweite druckführende Mittel (10; 12; 13) für die Beschichtungskomponenten auf einem zweiten höheren Druckniveau (p₂) besitzt, **dadurch gekennzeichnet, dass** zumindest alle zweiten druckerzeugenden und alle zweiten druckführenden Mittel (10; 12; 13) mit der beweglichen Werkzeugaufspannplatte (5) entlang eines Verfahrweges (100) der beweglichen Werkzeugaufspannplatte (5) mitfahrbar gekoppelt sind und dass die ersten druckerzeugenden und/oder die ersten druckführenden Mittel (8; 9; 15; 16) einen Niederdruckteil (NDT) bilden und der Niederdruckteil (NDT) der Beschichtungsanlage (7) auf einem Maschinenbett (2) der Spritzgießmaschine (1) angeordnet ist oder neben der Spritzgießmaschine (1) aufgestellt ist.

2. Spritzgießmaschine nach Anspruch 1, **dadurch gekennzeichnet, dass** die Spritzgießmaschine (1) eine Mehrkomponenten-Spritzgießmaschine ist.

3. Spritzgießmaschine nach Anspruch 2, **dadurch gekennzeichnet, dass** die Spritzgießmaschine (1) eine Zweiplatten-Spritzgießmaschine mit einer Drehtellereinrichtung oder eine Dreiplatten-Spritzgießmaschine mit einer Wendeplatteneinheit (6) ist.

4. Spritzgießmaschine nach einem der vorangegangenen Ansprüche, **dadurch gekennzeichnet, dass** die Beschichtungsanlage (7) eine RIM-Beschichtungsanlage, für aus zumindest zwei Komponenten zu mischendes Beschichtungsmaterial ist oder eine Einkomponenten-Beschichtungsanlage ist.

5. Spritzgießmaschine nach Anspruch 4, **dadurch gekennzeichnet, dass** die Beschichtunganlage (7) eine PU-, PUR-, PUA- oder eine Lackbeschichtungsanlage ist.

6. Spritzgießmaschine nach einem der vorangegangenen Ansprüche, **dadurch gekennzeichnet, dass** die Beschichtungsanlage (7) den Niederdruckteil (NDT) aufweisend zumindest einen Vorratsbehälter (8) für die zumindest eine Beschichtungskomponente besitzt und einen Hochdruckteil (HDT) aufweisend je Beschichtungskomponente zumindest eine Hochdruckpumpe (10) und im Falle einer Mehrkomponentenbeschichtungsanlage einen Mischkopf (13) zum Mischen von zumindest zwei Komponenten des Beschichtungsmaterials besitzt und im Falle einer Einkomponenten-Anlage einen Injektor aufweist.

7. Spritzgießmaschine nach einem der vorangegangenen Ansprüche, **dadurch gekennzeichnet, dass** eine freie Leitungslänge zwischen den Hochdruckpumpen (10) und dem Mischkopf (13) zumindest bis auf für Wartungszwecke notwendige flexible Schläuche mittels starren Rohren ausgebildet ist.

8. Spritzgießmaschine nach einem der vorangegangenen Ansprüche, **dadurch gekennzeichnet, dass** zur Aufnahme des Hochdruckteils (HDT) der Beschichtungsanlage (7) ein Schlitten (17) vorgesehen ist, der mit der beweglichen Werkzeugaufspannplatte (5) verbunden ist und gegenüber einem Maschinenbett (2) der Spritzgießmaschine (1) verschieblich gelagert abgestützt ist.

9. Spritzgießmaschine nach einem der vorangegangenen Ansprüche, **dadurch gekennzeichnet, dass** der Niederdruckteil (NDT) und der verfahrbare Hochdruckteil (HDT) der Beschichtungsanlage (7) mit flexiblen Niederdruckschläuchen (16) zur Führung der Beschichtungskomponenten fluidisch verbunden sind.

10. Spritzgießmaschine nach einem der vorangegangenen Ansprüche, **dadurch gekennzeichnet, dass** dem Hochdruckteil (HDT) der Beschichtungsanlage (7) zumindest eine Farbdosiereinrichtung (22) zugeordnet ist und die Farbdosiereinrichtung (22) nicht mit der beweglichen Werkzeugaufspannplatte (5) mitbewegbar angeordnet ist.

11. Spritzgießmaschine nach einem der vorangegangenen Ansprüche, **dadurch gekennzeichnet, dass** die Niederdruckleitungen (15) zumindest eine Abzweigung (31) aufweisen, wobei ein einziger Niederdruckteil (NDT) mit zwei oder mehreren Hochdruckteilen (HDT) zweier oder mehrerer Spritzgießmaschinen (1) verbunden ist.

12. Spritzgießmaschine nach einem der vorangegangenen Ansprüche, **dadurch gekennzeichnet, dass** die Spritzgießmaschine (1) von einer Spritzgießmaschine (1) mit einer Beschichtungsanlage (7) in eine Spritzgießmaschine (1) mit zwei oder mehr Einspritzaggregaten (3) zur Herstellung von Mehrkomponentenspritzgießteilen umrüstbar ist.

13. Spritzgießmaschine nach einem der vorangegangenen Ansprüche, **dadurch gekennzeichnet, dass** bei der neben der ersten Thermoplasteinspritzeinheit zumindest eine weitere Thermoplasteinspritzeinheit angebracht ist.

14. Spritzgießmaschine nach einem der vorangegangenen Ansprüche, **dadurch gekennzeichnet, dass** der Mischkopf (13) eine auch für eine Einspritzaggregat (3) vorgesehene zentrale Öffnung (23) der beweglichen Werkzeugaufspannplatte (5) durchgreifend mit der Formwerkzeughälfte (18a) verbunden ist.

## Claims

1. An injection moulding machine with a coating unit (7), wherein the injection moulding machine (1) has at least one fixed platen (4) and one movable platen (5) for the fastening of mould halves of at least one mould, and the coating unit (7) has first pressure-generating and/or first pressure-directing means (8; 9; 15; 16) for coating components on a first lower pressure level (p₁) and second pressure-generating and/or second pressure-directing means (10; 12; 13) for the coating components on a second higher pressure level (p₂), **characterized in that** at least all the second pressure-generating and all the second pressure-directing means (10; 12; 13) are coupled in a jointly movable manner with the movable platen (5) along a movement path (100) of the movable platen (5), and that the first pressure-generating and/or the first pressure-directing means (8; 9; 15; 16) form a low pressure part (NDT) and the low pressure part (NDT) of the coating unit (7) is arranged on a machine bed (2) of the injection moulding machine (1) or is set up adjacent to the injection moulding machine (1).

2. The injection moulding machine according to Claim 1, **characterized in that** the injection moulding machine (1) is a multi-component injection moulding machine.

3. The injection moulding machine according to Claim 2, **characterized in that** the injection moulding machine (1) is a two-plate injection moulding machine with a rotary plate device, or a three-plate injection moulding machine with a reversing plate unit (6).

4. The injection moulding machine according to one of the proceeding claims, **characterized in that** the coating unit (7) is a RIM coating unit for coating material which is to be mixed from at least two components, or is a single-component coating unit.

5. The injection moulding machine according to Claim 4, **characterized in that** the coating unit (7) is a PU, PUR, PUA or lacquer coating unit.

6. The injection moulding machine according to one of the preceding claims, **characterized in that** the coating unit (7) has the low pressure part (NDT) having at least one storage container (8) for the at least one coating component, and a high pressure part (HDT) having for each coating component at least one high pressure pump (10), and in the case of a multi-component coating unit, a mixing head (13) for the mixing of at least two components of the coating material, and has an injector in the case of a single-component unit.

7. The injection moulding machine according to one of the preceding claims, **characterized in that** a free line length between the high pressure pumps (10) and the mixing head (13) is formed by means of rigid pipes at least except for flexible hoses which are necessary for maintenance purposes.

8. The injection moulding machine according to one of the preceding claims, **characterized in that** to receive the high pressure part (HDT) of the coating unit (7) a carriage (17) is provided, which is connected with the movable platen (5) and supported in a displaceably mounted manner with respect to a machine bed (2) of the injection moulding machine (1).

9. The injection moulding machine according to one of the preceding claims, **characterized in that** the low pressure part (NDT) and the movable high pressure part (HDT) of the coating unit (7) are fluidically connected with flexible low pressure hoses (16) for the directing of the coating components.

10. The injection moulding machine according to one of the preceding claims, **characterized in that** at least one colour metering device (22) is associated with the high pressure part (HDT) of the coating unit (7), and the colour metering device (22) is not arranged in a jointly movable manner with the movable platen (5).

11. The injection moulding machine according to one of the preceding claims, **characterized in that** the low pressure lines (15) have at least one branch (31), wherein a single low pressure part (NDT) is connected with two or more high pressure parts (HDT) of two or more injection moulding machines (1) .

12. The injection moulding machine according to one of the preceding claims, **characterized in that** the injection moulding machine (1) is able to be converted from an injection moulding machine (1) with one coating unit (7) into an injection moulding machine (1) with two or more injection units (3) for the production of multi-component injection moulded parts.

13. The injection moulding machine according to one of the preceding claims, **characterized in that** at the, adjacent to the, first thermoplastics injection unit at least one further thermoplastics injection unit is arranged.

14. The injection moulding machine according to one of the preceding claims, **characterized in that** the mixing head (13), engaging through a central opening (23) of the movable platen (5) also provided for an injection unit (3), is connected with the mould half (18a).

## Revendications

1. Machine à mouler par injection contenant une unité de revêtement (7), dans laquelle la machine à mouler par injection (1) présente au moins une plaque de serrage d'outil fixe (4) et une plaque de serrage d'outil mobile (5) pour la fixation de moitiés d'outil de moulage d'au moins un outil de moulage et l'unité de revêtement (7) possède des premiers moyens de production de pression et/ou des premiers moyens de guidage de pression (8 ; 9 ; 15 ; 16) pour des composants de revêtement à un premier niveau de pression plus bas (p₁) et des seconds moyens de production de pression et/ou des seconds moyens de guidage de pression (10 ; 12 ; 13) pour les composants de revêtement à un second niveau plus élevé (p₂), **caractérisée en ce qu'**au moins tous les seconds moyens de production de pression et tous les seconds moyens de guidage de pression (10 ; 12 ; 13) sont couplés en étant mobiles conjointement avec la plaque de serrage d'outil mobile (5) le long d'un trajet de déplacement (100) de la plaque de serrage d'outil mobile (5) et que les premiers moyens de production de pression et/ou les premiers moyens de guidage de pression (8 ; 9 ; 15 ; 16) forment une partie basse pression (NDT) et la partie basse pression (NDT) de l'unité de revêtement (7) est disposée sur un lit de machine (2) de la machine à mouler par injection (1) ou est placée près de la machine à mouler par injection (1).

2. Machine à mouler par injection selon la revendication 1, **caractérisée en ce que** la machine à mouler par injection (1) est une machine à mouler par injection multicomposants.

3. Machine à mouler par injection selon la revendication 2, **caractérisée en ce que** la machine à mouler par injection (1) est une machine à mouler par injection à deux plateaux avec un dispositif de plateau revolver ou une machine à mouler par injection à trois plateaux avec une unité à plateau réversible (6).

4. Machine à mouler par injection selon l'une des revendications précédentes, **caractérisée en ce que** l'unité de revêtement (7) est une unité de revêtement RIM pour du matériau de revêtement à mélanger à partir d'au moins deux composants ou une unité de revêtement mono-composant.

5. Machine à mouler par injection selon la revendication 4, **caractérisée en ce que** l'unité de revêtement (7) est une installation de revêtement PU, Pur, PUA ou de peinture.

6. Machine à mouler par injection selon l'une des revendications précédentes, **caractérisée en ce que** l'unité de revêtement (7) présentant la partie basse pression (NDT) possède au moins un réservoir (8) pour l'au moins un composant de revêtement et une partie haute pression (HDT) présentant au moins une pompe haute pression (10) par composant de revêtement et en cas d'une unité de revêtement multicomposants, présente une tête de mélange (13) pour mélanger au moins deux composants du matériau de revêtement et présente un injecteur en cas d'unité mono-composant.

7. Machine à mouler par injection selon l'une des revendications précédentes, **caractérisée en ce qu'**une longueur de ligne libre entre les pompes à haute pression (10) et la tête de mélange (13) est formée au moyen de tubes rigides au moins à part des tuyaux flexibles nécessaires à des fins de maintenance.

8. Machine à mouler par injection selon l'une des revendications précédentes, **caractérisée en ce que** pour recevoir la partie haute pression (HDT) de l'unité de revêtement (7), un chariot (17) est prévu qui est relié à la plaque de serrage d'outil mobile (5) et est appuyé en étant disposé mobile par rapport à un lit de machine (2) de la machine à mouler par injection (1).

9. Machine à mouler par injection selon l'une des revendications précédentes, **caractérisée en ce que** la partie basse pression (NDT) et la partie haute pression (HDT) mobile de l'unité de revêtement (7) sont reliées à des tuyaux basse pression flexibles (16) pour guider les composants de revêtement de manière fluidique.

10. Machine à mouler par injection selon l'une des revendications précédentes, **caractérisée en ce qu'**au moins une unité de dosage de peinture (22) est attribuée à la partie haute pression (HDT) de l'unité de revêtement (7) et l'unité de dosage de peinture (22) est disposée en n'étant pas mobile conjointement avec la plaque de serrage d'outil mobile (5).

11. Machine à mouler par injection selon l'une des revendications précédentes, **caractérisée en ce que** les lignes basse pression (15) présentent au moins une dérivation (31), dans laquelle une seule partie basse pression (NDT) est reliée à deux ou plusieurs parties haute pression (HDT) de deux ou plusieurs machines à mouler par injection (1).

12. Machine à mouler par injection selon l'une des revendications précédentes, **caractérisée en ce que** la machine à mouler par injection (1) peut être transformée d'une machine à mouler par injection (1) avec une unité de revêtement (7) en une machine à mouler par injection (1) avec deux ou plusieurs groupes d'injection (3) pour fabriquer des pièces moulées par injection multicomposants.

13. Machine à mouler par injection selon l'une des revendications précédentes, **caractérisée en ce qu'**outre la première unité d'injection thermoplastique, au moins une unité d'injection thermoplastique est placée.

14. Machine à mouler par injection selon l'une des revendications précédentes, **caractérisée en ce que** la tête de mélange (13) est reliée avec la moitié d'outil de moulage (18a) en traversant une ouverture (23) centrale de la plaque de serrage d'outil mobile (5) prévue également pour un groupe d'injection (3).
